# EUROPEAN PATENT SPECIFICATION

(11) **EP 2 279 879 B1**
(45) Date of publication and mention of the grant of the patent: **30.03.2016**
(21) Application number: 10380099.1
(22) Date of filing: 29.07.2010
(51) Int. Cl.: B60B 1/04, B60B 21/06

(54) **Device for connecting a spoke to a rim in spoked wheels**
Vorrichtung zur Verbindung einer Speiche mit der Felge eines Speichenrades
Dispositif pour la connexion d'un rayon à la jante dans des roues à rayons

(30) Priority: 31.07.2009 ES 200930547
(43) Date of publication of application: 02.02.2011
(73) Proprietor: Berengueras Agullo, Xavier, 08025 Barcelona (ES)
(72) Inventor: Berengueras Agullo, Xavier, 08025 Barcelona (ES)
(74) Representative: Gil-Vega, Victor

(56) References cited:
- EP-A2- 2 272 684
- WO-A1-2005/058613
- WO-A1-2006/038239
- JP-A- 2000 127 701
- US-A- 5 806 935
- US-A1- 2008 290 721

## Description

The invention refers to a device for connecting the spokes in spoked wheels, whether for motor cycles, bicycles, mopeds or any other vehicle using this particular type of wheel.

The wheels for different types of vehicles can be divided into two types - wheels with an inner tube and tubeless wheels, or wheels without an inner tube. Tubeless wheels have the advantage that they deflate more slowly if punctured, which is quite appropriate when used in vehicles reaching high speeds, such as motor cycles for example.

On the other hand, the use of tubeless tyres is a priori incompatible with the use of spoked rims. Given that the device for coupling a spoke passes through the rim there has to be a hole for fitting the spoke and this causes leaks which have to be avoided.

One solution proposed in order to overcome these disadvantages is found in document JP 2000127701. This document discloses the use of internal gasket means of the standard type in the tyre in the case of bicycle wheels. Said gasket is kept under pressure between the head of the sleeve and the inside face of the rim surrounding the hole through which the spoke passes by means of a screw nut located on the other side of the rim. This arrangement has not been used for heavy vehicles although it is satisfactory when working at a lower pressure. In the case of vehicles which are driven by an engine, higher speeds are reached, greater weights are supported and this arrangement has not proved to be so effective. A major disadvantage presented by this system is that the gasket has to be located on the inside of the tyre and has to be fitted in such a way that it completely occupies the space of the hole, as a result of which once the tyre has been fitted it is difficult for the operator to check whether there is any deterioration or poor fitting of the gasket, which cannot be discovered until a leak occurs.

One type of rim especially designed for use in motorcycles with tubeless tyres is disclosed by document US 6474746, which describes the design of a special rim with two channels in which a first channel connects the rim to the tyre and a second channel places the rim in communication with the spokes. It is easy to see that this solution virtually doubles the weight of the rim, as a result of which it is not to be recommended. It has also been found that water accumulates between the two channels, giving rise to greater corrosion, and in addition this is a high cost solution.

Another alternative for overcoming this disadvantage is that proposed in document EP 1209006. In this case toroidal gasket means seated in a guide is used to provide an internal seal for the connection between the rim and the tyre, so as to avoid air leaks in this way. This solution is very much more economical than that disclosed in document US 6474746 but it has been found that this internal seal is not very reliable, as impacts can occur which separate the said toroidal gasket means from the rim, and in addition to this if a spoke should break the pressure on the gasket means is lost and this gives rise to a loss of air. On the other hand, being an internal device, the only way to correct a leak if damage or movement of the joint occurs is to remove the tyre completely.

Other alternatives are described in document WO 2005 058613 in which, among other solutions, there is disclosed the use of a hermetically sealed chamber between the rim and the tyre for each spoke in order to prevent air leaks at the joint, or the fitting of sealing means between the tyre and the rim to prevent the leaks mentioned. Solutions of this type are not at all suitable given that the tyre will deform with use over time and/or with temperature on account of its elastic component and will therefore change its structure, which will cause these sealing means to cease to be effective. In addition to this the internal chambers also deform, being bonded to the rim and/or the tyre, which makes them more susceptible to damage in the event of an impact against an obstacle in the road.

US 2008 290721 discloses a device for connecting a spoke to the rim in spoked wheels wherein a hole in the rim is passed through by a ferule which in turn is passed through by a nipple to which the spoke is threaded. The ferule comprising a peripheral channel for receiving a sealing ring acting between the ferule walls and the nipple at the outside parts of the rim.

WO 2006 038239A discloses a connection between a spoke and a rim, wherein the upper part of the spoke has an abutment member and a gasket is located between the abutment member and the internal surface of the rim or preferably along the axial length of the hole of the rim. The connection is locked by a nut at the external part of the rim, or by a resilient ring with an interposed space.

EP 2272684 A2 is an earlier patent document published after the priority date of the present application. It shows a device for connecting a spoke to a rim in spoked wheels which comprises a screw nut for adjusting the connection to the rim, a gasket providing a hermetic seal between the rim and the tyre and a sleeve for the spoke rim connection, the sleeve further comprising an internal thread for connection to the spoke and an external thread for fitting the screw nut, the screw nut and the gasket being outside the tyre, the screw nut pressing the tyre against the external surface of the tyre. This device, however, will loose its hermeticity with time, due to various factors, like a nut pressing the gasket, the concavity of the external surface of the rim, etc.

The invention describes a device which can be used with existing rims and tyres (and therefore does not require any additional arrangements), is stable to possible impacts caused by external obstacles or situations, and if they should require replacement its parts are located on the outside of the rim, as a result of which it can be adequately maintained, easily replaced if damaged and its condition can be checked at intervals.

Document US 5 806 935 discloses all the features of a device for connecting a spoke to a rim according to the preamble of claim 1.

The invention describes a device for connecting a spoke to a rim in spoked wheels which comprises:
- a screw nut for adjusting the connection to the rim,
- a gasket providing a seal between the rim and the tyre, and
- a sleeve for the spoke/rim connection
   the said sleeve further comprising an internal thread for connection to the spoke and an external thread for fitting the said screw nut, the said screw nut and the said gasket **being** outside the tyre, the said screw nut pressing the gasket against the external surface of the rim.

More in particular, the present invention consists in the device of claim 1. Preferred embodiments are to be found in the claims.

The location of the gasket (between the rim and the screw nut) means that easy access can be gained to it in order to replace it if necessary and that its condition can be checked without the need to completely remove the tyre.

This arrangement provides the hermetic seal at high pressures required for application to vehicles moving at high speeds, avoids the use of a sealing material between the tyre and the rim, makes it possible for maintenance to be carried out without the need to completely remove the tyre, is not susceptible to impacts as it has no internal parts which can deform through the effect of these disturbances, centering is as simple as in the case of a normal rim, it can be fitted to existing rims, its implementation does not require a very high cost and, in addition to this, should one of the spokes break no pressure in the tyre is lost because the said screw nut keeps the (preferably resilient) gasket pressed against the rim, thus preventing air leaks.

In addition to this, preferably, this invention provides a design for each of the parts to optimise the seal, the forces applied and satisfactory performance of the system.

Preferably, the device to which this invention relates is characterised in that the gasket comprises a component of a material having resilient properties.

More preferably, the device to which this invention relates is characterised in that the seal has a surface for contact with the rim and a surface for contact with the external cylindrical surface of the sleeve.

Even more preferably the device according to this invention is characterised in that the screw nut has a tapering internal surface to make contact with a matching surface thus easily ensuring that the gasket is properly sealed, despite its location outside the tyre.

In addition to this the sleeve may have a head which is designed to be located on the inside of the tyre which has a tapering end to assist sealing in the opening in the rim through which the sleeve enters.

In a specially preferred embodiment the device according to this invention is characterised in that the internal thread in the coupling sleeve is contrary in direction to the external thread, making it possible to tension the spoke. Given the special arrangement of the sleeve, screw nut and gasket, this makes it possible to use the device as a means for tensioning the spokes. The internal thread in the coupling sleeve can function as a component for maintaining this tension in an effective way if the external thread is contrary to it. This avoids providing additional tensioning means in the structure of the rim.

The system to which this invention relates applies to any type of rim and any material, unlike other devices in the prior art which only function with aluminium rims.

For a better understanding of the invention drawings of a preferred embodiment of this invention are appended for explanatory purposes but without being restrictive.
Figure 1 shows a partly sectioned view of the complete device mounted on a rim.
Figure 2 shows a cross section of the sleeve of the device.
Figure 3 shows a detail of the gasket providing a hermetic seal.
Figure 4 shows a detail of the adjustment screw nut.
Figure 5 shows a perspective cross-section of the device.
Figure 6 shows a perspective view of the exploded device.
Figure 7 shows a perspective view of the device.
Figure 8 shows another perspective view of the device.

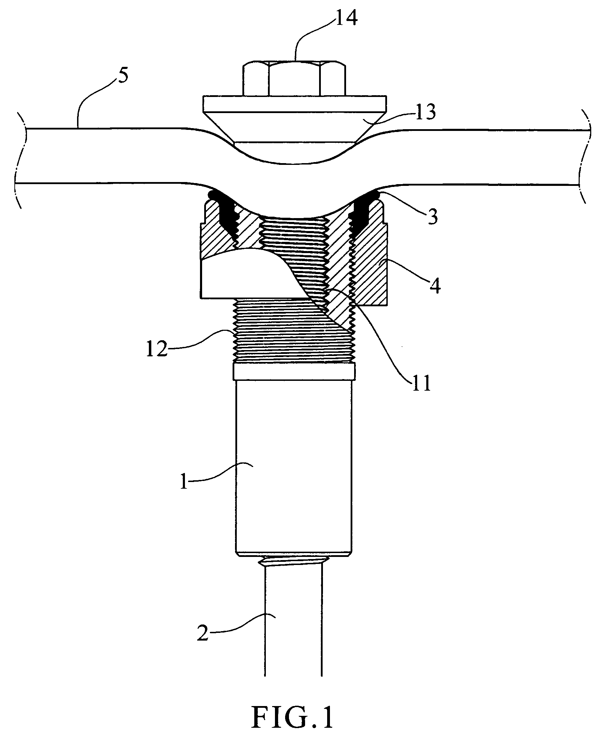

Figure 1 shows how the device is installed in a conventional spoked rim -5-. It also shows a spoke -2-which should have a thread on its terminal extremity -11-in order to permit it to be tensioned and for interconnection with the device, and it also shows a coupling sleeve -1- with a female thread for connection to spoke -2- and a male thread -12- for fitting a screw nut -4- which through the said male thread -12- of coupling sleeve -1- presses a gasket -3- against rim -5- using a head -13- as a top member for the upper part of a rim and a hexagonal head -14- to ensure stability when the said coupling sleeve is fitted.

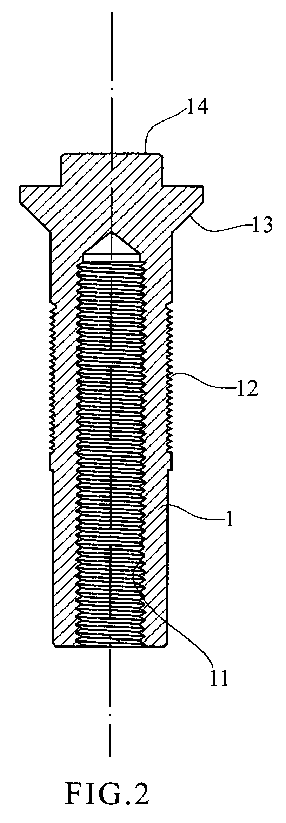

Figure 2 shows the configuration of the sleeve - 1-. Coupling sleeve -1- has a female thread -11-, the purpose of which is to provide connection to the thread of spoke and the device according to this invention, and a male thread -12- whose purpose is to maintain the seal for the tyre. As a top means for exerting a pressure on the rim there is a head -13- which has a tapering termination so that it fits the shape of the hole in such a way that the gasket (not shown) has to cover the least area possible.

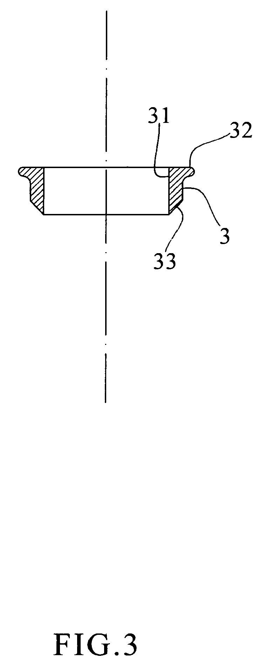

Figure 3 shows a cross-section of a gasket providing a hermetic seal, with greater details of its parts. Gasket -3- is formed of a sealing component, preferably having resilient properties and a part extending beyond the said screw nut -32- to prevent metal/metal contact between the said screw nut and the rim and thus avoid leaks, while internally -31- it fits the thread between the screw nut and the coupling sleeve (not shown) to prevent air leaks via the interior of the device and has a tapering end -33- so that when tightened by the screw nut (not shown) it exerts a pressure in both the vertical direction (fitting against the rim) and the horizontal direction (fitting against the thread) providing a greater seal.

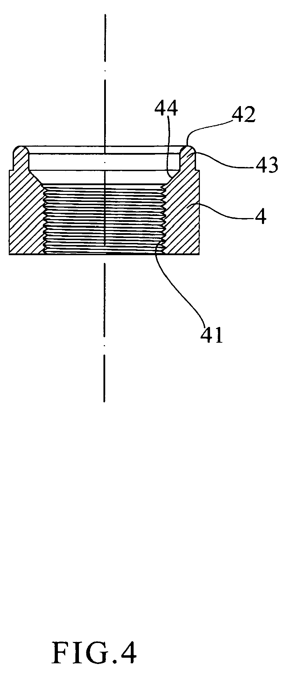

Figure 4 shows a cross-section illustrating greater detail of the components of screw nut -4-. Screw nut -4- which is of preferably metal material has a rounded end -42- mainly to avoid damage to the gasket (not shown). It has a female thread -41- which enables it to be connected to the coupling sleeve (not shown) and thus exert a pressure against the rim (not shown), while it also has a straight part -43- and a tapering end -44- for connection to the gasket (not shown).

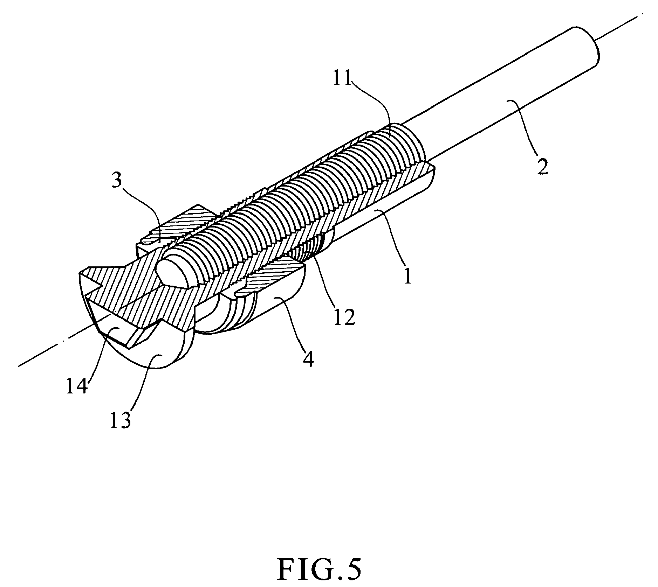

Figure 5 shows a cross-section of the device in which the connection between spoke -2- and the device according to this invention can be clearly seen. Spoke -2- has a thread at its terminal extremity -11- which in addition to permitting tensioning provides a connection to coupling sleeve -1-, which has a female thread for the abovementioned connection. Connecting sleeve -1- also has a male thread for connection to screw nut -4- which when rotated in the appropriate direction exerts a pressure on gasket -3-, and the latter in turn presses upon the rim (not shown) against the head -13- of the device thus ensuring a hermetically sealed joint.

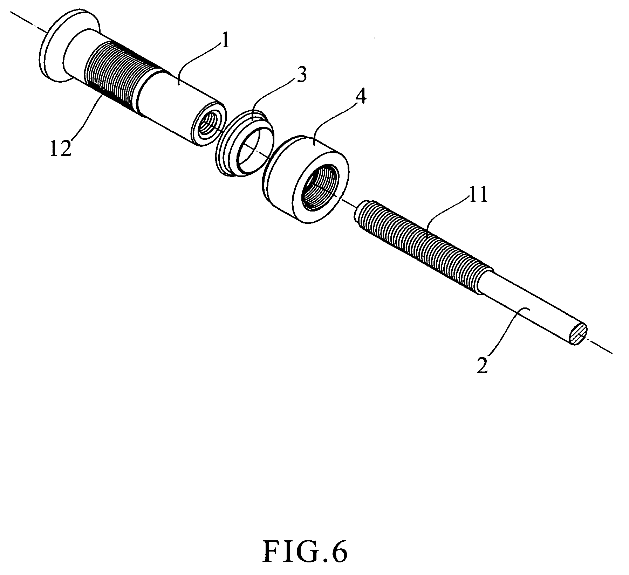

Figure 6 shows an exploded view of the device showing the components of a preferred embodiment of this invention. The figure shows a spoke -2- with a thread at its terminal extremity -11-, a screw nut -4-, a gasket -3-to provide a seal for the device, a coupling sleeve -1-connecting all the components together, and the male thread of coupling sleeve -12- whose main function is to provide means for screw nut -4- so that the latter can exert a suitable pressure against the rim (not shown).

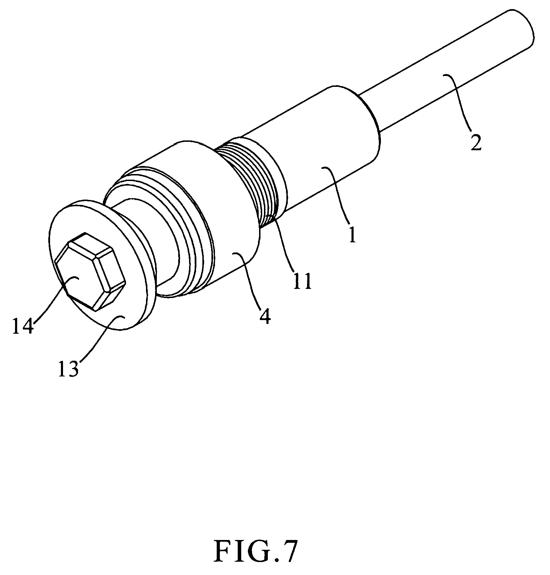

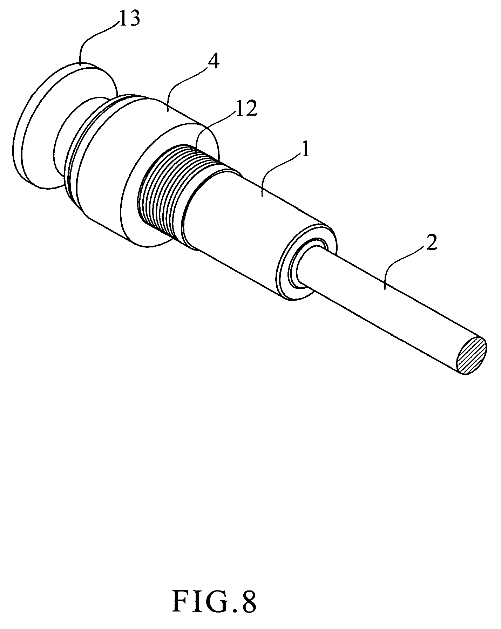

Figures 7 and 8 show two separate perspective views of the preferred embodiment of this invention and each of the parts described above may be seen therein.

Although the invention has been described with respect to preferred embodiments, these must not be regarded as restricting the invention, which is defined by the following claims.

## Claims

1. A device for connecting a spoke to a rim in spoked wheels which comprises:
- a screw nut for adjusting the connection to the rim,
- a gasket providing a hermetic seal between the rim and the tyre, and
- a coupling sleeve for the spoke/rim connection
the said sleeve further comprising an internal thread for connection to the spoke and an external thread for fitting the said screw nut, the said screw nut and the said gasket being outside the tyre, the said screw nut pressing the gasket against the external surface of the rim, **characterised in that** the internal thread of the coupling sleeve has a direction of advance which is contrary to that of the external thread, making it possible to tension the spoke.

2. A device according to claim 1, **characterised in that** the gasket has
a surface for contact with the rim and a surface for contact with the external cylindrical surface of the sleeve.
a part extending beyond the screw nut to prevent metal/metal contact between the said screw nut and the rim,
a tapering end so that when hightened by the screw nut it exerts a pressure in both the vertical direction and the horizontal direction providing a greater seal, the gasket internally fits the thread between the screw nut and the coupling sleeve, and
a component of material having resilient properties.

3. A device according to anu one of the preceding claims, **characterised in that** the screw nut has a tapering end for connection to the gasket.

4. A device according to any one of the preceding claims, **characterised in that** the sleeve has a head designed to locate it within the tyre which has a tapering end to help seal the hole in the rim through which the sleeve enters.

## Patentansprüche

1. Eine Vorrichtung für die Verbindung einer Speiche mit einer Felge an Speichenrädern umfassend:
eine Schraubenmutter für die Justierung der Verbindung mit der Felge,
eine Dichtung für eine hermetische Abdichtung zwischen der Felge und dem Reifen, und
eine Kupplungsmuffe für die Verbindung der Speiche mit der Felge
wobei diese Muffe ausserdem ein Innengewinde für den Anschluss an die Speiche und ein Aussengewinde für das Anbringen besagter Schraubenmutter aufweist, wobei diese Schraubenmutter und diese Dichtung ausserhalb des Reifens liegen und die Schraubenmutter die Dichtung an die Aussenoberfläche der Felge drückt, **gekennzeichnet dadurch, dass** das Innengewinde der Kupplungsmuffe eine Vorschubrichtung aufweist, die der des Aussengewindes entgegengesetzt ist wodurch die Speiche gespannt werden kann.

2. Eine Vorrichtung gemäss Anspruch 1 **gekennzeichnet dadurch dass** die Dichtung folgendes aufweist:
eine Fläche für den Kontakt mit der Felge und eine Fläche für den Kontakt mit der zylinderförmigen Aussenfläche der Muffe,
einen Teil, der sich über die Schraubenmutter hinaus erstreckt, um den Kontakt von Metall/Metall zwischen besagter Schraubenmutter und der Felge zu vermeiden,
ein kegelförmiges Ende, so dass bei Anziehen der Schraubenmutter dasselbe einen Druck sowohl in vertikaler als auch in horizontaler Richtung ausübt, wodurch eine bessere Abdichtung erreicht wird; die Dichtung ist intern an das Gewinde zwischen der Schraubenmutter und der Kupplungsmuffe eingepasst, und
eine Materialkomponente mit elastischen Eigenschaften.

3. Eine Vorrichtung gemäss irgendeinem der vorhergehenden Ansprüche **gekennzeichnet dadurch, dass** die Schraubenmutter ein verjüngendes Ende für den Anschluss an die Dichtung aufweist.

4. Eine Vorrichtung gemäss irgendeinem der vorhergehenden Ansprüche **gekennzeichnet dadurch, dass** die Muffe einen Kopfteil aufweist, der so ausgebildet ist, dass er im Reifen angebracht werden kann, versehen mit einem kegelförmigen Ende zur Versiegelung der Öffnung in der Felge, durch die die Muffe gesteckt wird.

## Revendications

1. Un dispositif pour raccorder un rayon à une jante dans les roues à rayons, comprenant :
un écrou pour ajuster le raccordement à la jante,
un joint pour scellage hermétique entre la jante et le pneu, et
un manchon d'accouplement pour le raccordement rayon/jante,
ledit manchon comprenant en outre un filetage intérieur pour le raccordement au rayon, et un filetage extérieur pour ajuster ledit écrou; l'écrou et le joint mentionnés sont à l'extérieur du pneu; ledit écrou pousse le joint contre la surface externe de la jante, **caractérisé en ce que** le filetage intérieur du manchon d'accouplement a une direction d'avance contraire à la direction du filetage extérieur, rendant possible la tension du rayon.

2. Un dispositif conformément à la revendication 1, **caractérisé en ce que** le joint a
une surface de contact avec la jante et une surface de contact avec la surface cylindrique externe du manchon,
une partie qui dépasse l'écrou pour éviter le contact métal/métal entre ledit écrou et la jante,
une extrémité en rétrécissement de manière à ce que, lorsque l'écrou la relève, elle exerce une pression sur la direction verticale et la direction horizontale, ce qui accentue le scellage ; le joint intérieurement ajuste le filetage entre l'écrou et le manchon d'accouplement, et
une composante du matériau ayant des propriétés résistantes.

3. Un dispositif conformément à l'une quelconque des revendications ci-dessus, **caractérisé en ce que** l'écrou a une extrémité en rétrécissement pour le raccordement au joint.

4. Un dispositif conformément à l'une quelconque des revendications ci-dessus, **caractérisé en ce que** le manchon a une tête conçue pour la placer dans le pneu qui a une extrémité en rétrécissement pour faciliter le scellage du trou dans la jante à travers duquel le manchon est introduit.
